# FASCICULE DE BREVET EUROPEEN

(11) **EP 0 655 366 B1**
(45) Date de publication et mention de la délivrance du brevet: **10.06.1998**
(21) Numéro de dépôt: 94440073.8
(22) Date de dépôt: 22.11.1994
(51) Int. Cl.: B60P 1/00, B65G 69/28

(54) **Rampe inclinée d'accès pour l'extrémité arrière d'un porte-véhicules**
Schrägrampe für Zugang am hinteren Ende eines Kraftfahrzeugtransporters
Inclined ramp for access at the rear-end of a motor vehicle transporter

(30) Priorité: 29.11.1993 FR 9314424
(43) Date de publication de la demande: 31.05.1995
(73) Titulaire: LOHR INDUSTRIE, 67980 Hangenbieten (FR)
(72) Inventeur: Schmitt, Auguste, F-67210 Obernai (FR)
(74) Mandataire: Metz, Paul

(56) Documents cités:
- DE-U- 8 812 444
- GB-A- 243 628
- US-A- 5 097 557
- US-A- 5 145 310

## Description

L'invention se rapporte à une rampe inclinée d'accès à extrémité articulée pour l'arrière d'un porte-véhicules.

Plus particulièrement, la rampe inclinée d'accès selon l'invention présente une extrémité articulée conformée en une pluralité de doigts pivotants.

Les unités routières porte-véhicules et plus particulièrement les porte-voitures se chargent et se déchargent par l'arrière.

A cet effet, des rampes inclinées permettent aux véhicules d'accéder à partir du sol au plan de chargement de l'unité porte-véhicules. Ces rampes permettent également de la quitter lors du déchargement.

Ces rampes sont formées classiquement à partir de bandes de tôle perforée, renforcées par un cadre.

Certaines rampes sont équipées d'un volet d'extrémité destiné à faciliter l'accès et la montée sur le corps de la rampe.

Lors de la montée ou de la descente, les voitures à faible garde au sol ou à grand porte-à-faux avant risquent d'interférer par leur partie basse avant avec le corps de la rampe.

Par ailleurs, le volet d'éxtrémité est relié de façon articulée à l'extrémité de la rampe. Cette liaison articulée dissociable ou non ne permet pas de régler tous les problèmes liés à ce type d'extrémité.

Dans sa version indissociable, elle présente une surépaisseur gênante à l'état rabattu sur la face supérieure de la rampe. Dans sa version dissociable, le risque de perte est identique à celui de tous les accessoires amovibles.

On connaît une rampe d'accès à un plan de chargement par le brevet américain 5,145,310.

La rampe 12 décrite dans ce brevet est formée d'un corps monté rabattable sur la remorque porte-engins, de forme générale prismatique qui vient prolonger le plan de chargement en vue d'assurer sa continuité jusqu'au sol.

Ces éléments sont articulés à pivotement sur le bord transversal d'extrémité du plan de chargement. En raison de leur poids important, des dispositifs d'assistance à la manoeuvre de rabattement sont prévus.

Cette rampe de construction particulièrement solide est destinée aux véhicules lourds : engins de terrassement, de travaux public, véhicules militaires lourds qui présentent par nécessité une importante garde au sol et un porte-à-faux avant plutôt court.

Dans ces conditions, la pente de la rampe d'accès importe peu. Il suffit qu'elle ne dépasse pas la valeur maximale pour ce type de véhicules qui se situe bien au-delà de celle possible pour les voitures de tourisme actuelles et plus particulièrement pour les voitures de sport.

La présente invention a pour but de fournir pour chaque ligne de roues une rampe qui permet aux véhicules de faible garde au sol d'accéder ou de quitter sans dommage un plan de chargement situé en hauteur, par exemple celui d'un véhicule porte-voitures.

L'extrémité effaçable de chaque rampe constitue elle-même une rampe de faible longueur permettant de constituer un premier angle d'attaque compatible avec la garde au sol du véhicule à charger pour éviter l'interaction avec le plan supérieur de la rampe présentant une pente selon un deuxième angle d'attaque également compatible avec la garde au sol du véhicule à charger.

La présente invention a également pour but de fournir une rampe inclinée d'accès présentant une structure nervurée ou ondulée formée d'une alternance de gorges et de saillies terminée par une extrémité articulée conformée en doigts pivotants de largeur, d'épaisseur et d'écartement appropriés pour venir se loger dans les gorges lorsque les doigts se trouvent en position rabattue inopérante.

L'utilisation de la rampe selon l'invention apporte une solution satisfaisante aux diverses difficultés d'exploitation.

Quelle que soit la configuration d'utilisation, les doigts d'extrémité restent reliés à l'extrémité de la rampe et ne présentent aucun risque de perte.

Au repos, en position rabattue, les doigts viennent s'effacer totalement dans l'épaisseur de la rampe. Aucune partie des doigts ne dépasse de façon significative du plan de la rampe si bien que celle-ci pourrait être utilisée ainsi, doigts en position rabattue, pour les véhicules courants.

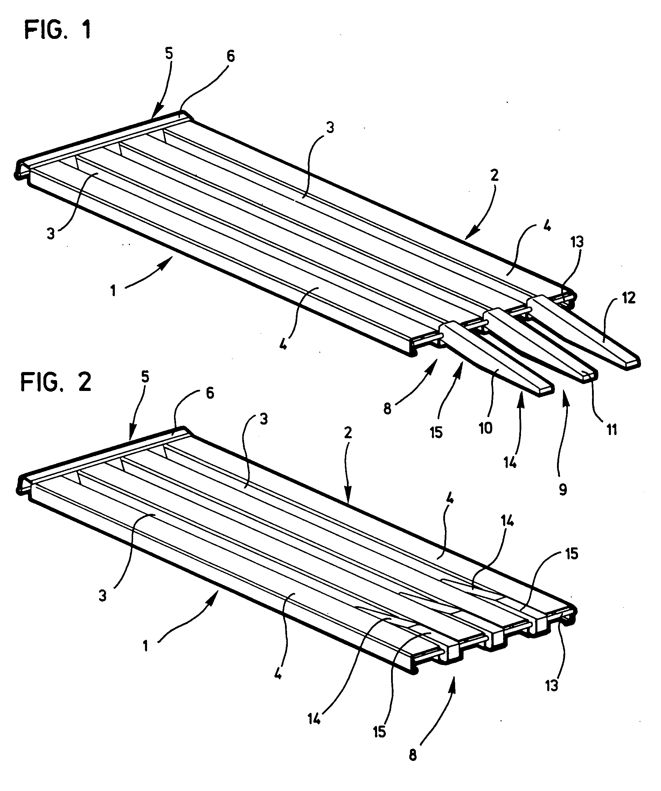

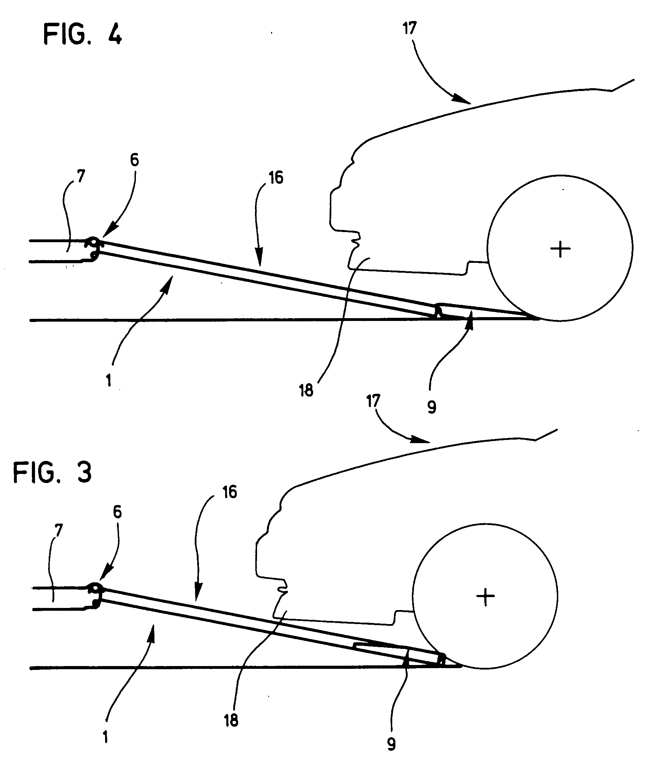

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue simplifiée en perspective en position opérante, la totalité des doigts se trouvant en appui sur le sol,
. la figure 2 est une vue en perspective en position inopérante des doigts effacés en position rabattue dans l'épaisseur de la rampe,
. la figure 3 est une vue schématique de profil illustrant l'interférence avec la rampe dans le cas d'une voiture à faible garde au sol,
. la figure 4 est une vue schématique de profil illustrant la suppression de l'interférence grâce à la rampe selon l'invention.

La rampe d'accès présente un corps 1 rectangulaire formé dans un format d'une structure ondulée 2, par exemple en tôle ondulée, ou d'une structure en cannelures, selon laquelle se succèdent transversalement des gorges 3 et des saillies 4 longitudinales.

La rampe peut être réalisée avantageusement sous la forme d'une tôle pliée selon les gorges 3 et les saillies 4, par exemple conformées en créneaux ou en cannelures comme représentées sur les figures, constituant alors un excellent compromis entre le poids et la résistance à la charge.

La rampe présente à son extrémité haute 5 une pièce transversale recourbée 6 permettant son accrochage à l'extrémité du plan de chargement 7 de l'unité porte-véhicules.

La rampe présente une extrémité libre articulée 8 conformée en une pluralité 9 de doigts articulés selon par exemple une succession transversale, par exemple au nombre de trois 10, 11 et 12, montés pivotants sur un axe transversal 13 commun d'extrémité comme le montrent les figures ou sur un autre moyen d'articulation.

Les doigts 10-12 d'extrémité sont biseautés au niveau des extrémités libres de leurs faces inférieures selon un plan incliné tel que 14 à pente correspondant à leur inclinaison. Les doigts prennent appui sur le sol par le plan 14 constituant la plage d'appui de chaque biseau.

Leur nombre est au plus égal à celui des gorges 3 existant dans la rampe, gorges dans le prolongement longitudinal desquelles ils se trouvent.

L'écartement, la longueur et l'épaisseur des doigts sont tels qu'ils viennent se loger entièrement dans les gorges 3 du corps de la rampe lorsqu'ils sont pivotés en position rabattue.

Dans cette position, les faces droites inférieures 15 des doigts sont disposées en retrait par rapport au plan supérieur 16 de la rampe formé par la succession des saillies 4 ou de préférence à fleur, de manière à présenter une surface supérieure de rampe sensiblement lisse.

Les doigts sont mobiles en pivotement individuellement ou simultanément selon le mode de liaison avec leur axe de pivotement ou selon la façon d'être montés sur cet axe.

On peut n'utiliser qu'un seul ou deux doigts.

Leur écartement est lié à celui des gorges 3 de la rampe d'accès qui sera choisi en rapport et en combinaison avec la largeur des pneus et la largeur des voies des véhicules.

Les figures 3 et 4 montrent l'efficacité de l'extrémité articulée selon l'invention. Des voitures 17 à faible garde au sol, par exemple celles comportant un bouclier avant bas 18, risquent d'interférer avec le corps de la rampe lorsque les doigts se trouvent en position rabattue hors service (figure 3).

Par contre, ils procurent à la voiture une surélévation initiale suffisante pour lui éviter l'interférence avec le corps de la rampe (figure 4).

## Revendications

1. Rampe d'accès à l'arrière d'une unité routière porte-véhicules pour le chargement et le déchargement des véhicules comprenant deux extrémités, caractérisée en ce que son corps est constitué d'un format rectangulaire (1) présentant une surface supérieure ondulée constituée d'une alternance transversale de gorges (3) et de saillies (4) et en ce que l'une des extrémités est conformée selon une pluralité (9) de doigts articulés à pivotement au corps de la rampe.

2. Rampe selon la revendication 1, caractérisée en ce que le corps de la rampe est une tôle ondulée (2).

3. Rampe selon la revendication 2, caractérisée en ce que la forme d'onde de la tôle ondulée (2) est en créneaux délimitant les gorges (3) et des saillies (4) sous la forme de plages hautes et basses se succédant transversalement.

4. Rampe selon l'une quelconque des revendications précédentes, caractérisée en ce que l'écartement et la largeur des doigts (10-12) sont prévus pour qu'ils viennent se loger dans les gorges (3) lorsqu'ils sont rabattus en position inactive contre le corps de la rampe.

5. Rampe selon l'une quelconque des revendications précédentes, caractérisée en ce que les doigts (10-12) sont biseautés au niveau de leur extrémité libre.

6. Rampe selon la revendication 5, caractérisée en ce que les doigts (10-12) sont biseautés sur leurs faces inférieures.

7. Rampe selon l'une quelconque des revendications précédentes, caractérisée en ce que l'épaisseur des doigts (10-12) est telle qu'ils restent en-dessous du plan supérieur (16) de la rampe formée par la succession des saillies (4).

8. Rampe selon l'une quelconque des revendications précédentes, caractérisée en ce que les doigts (10-12) sont mobiles simultanément.

9. Rampe selon l'une quelconque des revendications 1 à 7, caractérisée en ce que les doigts (10-12) sont mobiles individuellement.

10. Rampe selon la revendication 9 caractérisée en ce que l'on utilise un seul ou deux doigts.

## Claims

1. Ramp for access to the rear end of a vehicle-transporter lorry unit for the loading and unloading of the vehicles comprising two ends, characterized in that its body is constituted by a rectangular format (1) having a corrugated upper surface consisting of a transverse alternation of channels (3) and of projections (4) and in that one of the ends is shaped according to a plurality (9) of fingers articulated so as to pivot onto the body of the ramp.

2. Ramp according to Claim 1, characterized in that the body of the ramp is a corrugated steel sheet (2).

3. Ramp according to Claim 2, characterized in that the shape of the corrugation of the corrugated steel sheet (2) is that of indentations delimiting the channels (3) and projections (4) in the form of high and low areas which succeed one another transversely.

4. Ramp according to any one of the preceding claims, characterized in that the spacing and the width of the fingers (10-12) are arranged so that they fit into the channels (3) when folded back into the inactive position against the body of the ramp.

5. Ramp according to any one of the preceding claims, characterized in that the fingers (10-12) are chamfered at their free end.

6. Ramp according to Claim 5, characterized in that the fingers (10-12) are chamfered on their lower faces.

7. Ramp according to any one of the preceding claims, characterized in that the thickness of the fingers (10-12) is such that they remain below the upper plane (16) of the ramp formed by the succession of projections (4).

8. Ramp according to any one of the preceding claims, characterized in that the fingers (10-12) are movable simultaneously.

9. Ramp according to any one of claims 1 to 7, characterized in that the fingers (10-12) are movable individually.

10. Ramp according to claim 9, characterized in that a single finger or two fingers are used.

## Patentansprüche

1. Zufahrtsrampe am Heck einer Straßenfahrzeugtransporteinheit zum Beladen und Entladen von Fahrzeugen, mit zwei Endseiten, dadurch gekennzeichnet, daß ihr Körper (1) ein rechteckiges Format mit einer gewellten, aus einer transversalen Folge von Rillen (3) und Schultern (4) gebildeten Oberseite aufweist, und daß eine der Endseiten als eine Mehrzahl von schwenkbar an dem Rampenkörper angelenkten Fingern (9) ausgestaltet ist.

2. Rampe nach Anspruch 1, dadurch gekennzeichnet, daß der Rampenkörper ein Wellblech (2) ist.

3. Rampe nach Anspruch 2, dadurch gekennzeichnet, daß die Wellenform des Wellblechs (2) zinnenförmig ist und die Rillen (3) und Schultern (4) in Form von einander transversal folgenden hohen und tiefen Flächen begrenzt.

4. Rampe nach einem der Ansprüche 1 bis 3, dadurch gekennzeichnet, daß der Abstand und die Breite der Finger (10 bis 12) so vorgesehen sind, daß sie sich in die Rillen (3) einlegen, wenn sie in eine inaktive Position gegen den Rampenkörper umgelegt sind.

5. Rampe nach einem der Ansprüche 1 bis 4, dadurch gekennzeichnet, daß die Finger (10 bis 12) auf Höhe ihres freien Endes abgefast sind.

6. Rampe nach Anspruch 5, dadurch gekennzeichnet, daß die Finger (10 bis 12) an ihren Unterseiten abgefast sind.

7. Rampe nach einem der Ansprüche 1 bis 6, dadurch gekennzeichnet, daß die Stärke der Finger (10 bis 12) derart ist, daß sie unterhalb der von der Folge der Schultern (4) gebildeten oberen Ebene (16) der Rampe bleiben.

8. Rampe nach einem der Ansprüche 1 bis 7, dadurch gekennzeichnet, daß die Finger (10 bis 12) gleichzeitig bewegbar sind.

9. Rampe nach einem der Ansprüche 1 bis 7, dadurch gekennzeichnet, daß die Finger (10 bis 12) einzeln bewegbar sind.

10. Rampe nach Anspruch 9, dadurch gekennzeichnet, daß ein einzelner oder zwei Finger einsetzbar sind.
